(19) Europäisches Patentamt
European Patent Office
Office européen des brevets

(11) **EP 0 880 314 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(21) Anmeldenummer: **97904374.2**

(22) Anmeldetag: **03.02.1997**

(51) Int Cl.:
*A01N 25/18* (2006.01)  *A01N 53/00* (2006.01)

(86) Internationale Anmeldenummer:
**PCT/EP1997/000473**

(87) Internationale Veröffentlichungsnummer:
**WO 1997/029634 (21.08.1997 Gazette 1997/36)**

(54) **INSEKTIZIDE ZUSAMMENSETZUNGEN AUF BASIS VON POLYMEREN**

INSECTICIDE COMPOSITIONS MADE FROM POLYMERS

COMPOSITIONS INSECTICIDES A BASE DE POLYMERES

(84) Benannte Vertragsstaaten:
**BE CH DE ES FR GB GR IT LI NL PT**

(30) Priorität: **15.02.1996 DE 19605581**

(43) Veröffentlichungstag der Anmeldung:
**02.12.1998 Patentblatt 1998/49**

(73) Patentinhaber: **S.C.JOHNSON & SON, INC.**
**Racine, WI 53403-2236 (US)**

(72) Erfinder:
• **DUJARDIN, Ralf**
**D-47877 Willich (DE)**
• **BUBLITZ, Mike-Dirk**
**D-51399 Burscheid (DE)**
• **NEUMANN, Hermann**
**10220 Jakarta (ID)**

(74) Vertreter: **Ruschke, Hans Edvard**
**RUSCHKE HARTMANN MADGWICK & SEIDE**
**Patent- und Rechtsanwälte**
**Pienzenauerstrasse 2**
**81679 München (DE)**

(56) Entgegenhaltungen:
**EP-A- 0 671 123        FR-A- 2 639 187**
**FR-A- 2 639 188        GB-A- 2 070 933**

• **DATABASE WPI Derwent Publications Ltd., London, GB; AN 91-300221 XP002031404 & JP 03 200 704 A (SUMITOMO CHEM IND) 2.September 1991**
• **DATABASE WPI Derwent Publications Ltd., London, GB; AN 80-08532C XP002031419 & JP 54 160 732 A (FUMAKILA KK) 19.Dezember 1979**
• **DATABASE WPI Derwent Publications Ltd., London, GB; AN 71-54379S XP002031420 & JP 46 029 010 A**
• **DATABASE WPI Derwent Publications Ltd., London, GB; AN 80-45561C XP002031421 & JP 55 064 501 A**
• **DATABASE WPI Derwent Publications Ltd., London, GB; AN 78-29345A XP002031422 & JP 53 024 032 A**

## Beschreibung

Die Erfindung betrifft insektizide Zusammensetzungen, die ein oder mehrere spezifische pyrethroide Insektizide, eingearbeitet in ein oder mehrere spezifische thermoplastische Polymere enthalten, aus denen sie bei einer Temperatur von 60 bis 150 °C freigesetzt werden können, ohne dass sich die Form des thermoplastischen Polymers ändert. Die Erfindung betrifft ferner ein Verfahren zur Herstellung dieser insektiziden Zusammensetzungen und ihre Verwendung zur Bekämpfung von Insekten, die in Innenräumen vorkommen. Die erfindungsgemäßen insektiziden Zusammensetzungen sind in der Lage, das Insektizid bei einer Temperatur von 60 bis 150 °C kontrolliert freizusetzen, ohne dass sich die Form und makroskopische Erscheinung des thermoplastischen Polymers dadurch verändert.

Es ist bekannt, zur Abtötung von beispielsweise Stechmücken geeignete Materialien wie Zellstoff- oder Baumwollkarton, Asbest oder Keramik mit Insektiziden zu imprägnieren unter Bildung von Insektizid-Plättchen, die in einem elektrischen Heizgerät, einem so genannten Plättchenverdampfer, zur Freisetzung des darin enthaltenen Insektizids auf eine Temperatur 120 bis 190 °C erwärmt werden. Ein ähnliches Prinzip liegt den bekannten Gelverdampfern zugrunde, bei denen die Insektizide in eine Gelformulierung eingearbeitet worden sind.

Eine andere Methode zur Bekämpfung von beispielsweise Stechmücken besteht in der Verwendung sogenannter Flüssigverdampfer, in denen eine insektizid wirksame flüssige Formulierung über ein Dochtsystem durch Erwärmung kontinuierlich verdampft wird.

Aus "Derwent Abstract" von JP-A-03/200 704 ist es bekannt, Mischungen aus 1-Ethinyl-2-methyl-2-pentenyl-chrysanthemat und einem synthetischen Harz, wie z.B. Ethylen/Methylmethacrylat- oder Ethylen/Vinylacetat-Copolymeren, herzustellen und aus diesen das Insektizid zu verdampfen. Aus JP-A-54/160 732 sind Verdampfungsplättchen bekannt, die aus porösen Materialien bestehen, die mit einem Wirkstoff wie 3-Allyl-2-methyl-cyclopent-2-en-4-on-yl-chrysanthemat und Polybuten imprägniert sind. Dabei wird der Molekulargewichtsbereich des Polybutens so gewählt, dass das Polybuten in öliger Form vorliegt.

Aus EP-A-0 671 123 sind Mischungen aus Polyether/Polyamid-Block-Copolymeren und insektiziden Wirkstoffen wie Pynamin und Pynamin forte bekannt, während aus FR-A-2 639 187 und FR-A-2 639 188 Mischungen aus Polyvinylchlorid und dem insektiziden Wirkstoff Bioallethrin bekannt sind. Aus GB-A-2 070 933 sind Mischungen aus verschiedenen Harzen und Bioallethrin als insektizidem Wirkstoff bekannt, während in "Derwent Abstract" von JP-A-46/029 010 Mischungen aus flüchtigen Insektiziden und Ethylen/Vinylacetat-Copolymeren bekannt sind. Mischung aus flüchtigen Insektiziden wie p-Dichlorbenzol und Polymeren wie Polystyrol, Polyvinylalkohol und Polyvinylacetat sind außerdem in "Derwent Abstract" von JP-A-55/064 501 und in "Derwent Abstract" von JP-A-53/024 032 beschrieben.

Aus allen vorgenannten Mischungen werden die insektiziden Wirkstoffe unter Verwendung von Plättchen-, Gel- oder Flüssigverdampfern unter Erwärmen verflüchtigt und auf diese Weise an den umgebenden Luftraum abgegeben. Die Nachteile dieser Plättchen-, Gel- oder Flüssigverdampfern liegen darin begründet, dass Verdampfungsbeschleuniger und andere Formulierungshilfsstoffe in die insektiziden Zusammensetzungen eingearbeitet werden müssen, um einer thermischen Zersetzung der Wirkstoffe vorzubeugen, und dass außerdem die Notwendigkeit besteht, organische Lösungsmittel bei ihrer Herstellung zu verwenden. Ein weiterer Nachteil all dieser bekannten Verdampfungsprinzipien besteht außerdem darin, dass der Anwender mit dem Wirkstoff bzw. der Wirkstoffformulierung in Kontakt kommen kann, beispielsweise im Falle des Auslaufens einer Flüssigformulierung bei Flüssigverdampfern oder durch Verschlucken von Papierplättchen bei Plättchenverdampfern. Nachteilig an diesen bekannten Verdampfersystemen ist auch, dass sie im Allgemeinen eine unregelmäßige Wirkstoffabgabe-Charakteristik aufweisen und dass ihre Wirkungsdauer auf maximal 12 Stunden begrenzt ist.

Aufgabe der vorliegenden Erfindung war es daher, neue insektizide Zusammensetzungen zu finden, welche die vorstehend geschilderten Nachteile nicht aufweisen und darüber hinaus einfach anzuwenden sind, beispielsweise in bereits auf dem Markt befindliche Verdampfergeräten, beispielsweise Gelverdampfern, eingesetzt werden können (EP 0 321 279), die bei einer verhältnismäßig niedrigen Temperatur von 60 bis 150°C, vorzugsweise von 80 bis 120 °C, betrieben werden und die eine kontinuierliche Abgabe des Insektizid-Wirkstoffes über Zeiträume von bis zu 60 Tagen, vorzugsweise von bis zu 45 Tagen, ermöglichen.

Es wurde gefunden, dass diese Aufgabe erfindungsgemäß gelöst werden kann mit spezifischen neuen insektiziden Zusammensetzungen, Verfahren zu ihrer Herstellung und ihre Verwendung zur Bekämpfung von Insekten in Innenräumen.

Gemäß einem ersten Aspekt betrifft die Erfindung insektizide Zusammensetzungen, die enthalten

A) mindestens ein Insektizid aus der Gruppe
3-Allyl-2-methyl-cyclopent-2-en-4-on-1-yl-d-cis/trans-chrysanthemat (Pynamin forte®),
2,3,5,6-Tetrafluorbenzyl-(+)-1R-trans-2,2-dimethyl-3-(2,2-dichlorvinyl)-cyclopropancarboxylat (Transfluthrin, Bayothrin®), und

B) mindestens ein thermoplastisches Polymer mit einem Kristallit-Schmelzbereich zwischen 100 und 300 °C, vorzugsweise zwischen 150 und 250 °C, besonders bevorzugt zwischen 150 und 200 °C, aus der Gruppe Polyethylen und Polypropylen, aus dem das Insektizid bei einer Temperatur von 60 bis 150 °C, vorzugsweise von 80 bis 120 °C, freigesetzt werden kann, ohne dass sich die Form des thermoplastischen Polymers ändert.

Bei den erfindungsgemäß verwendbaren teilkristallinen thermoplastischen Polymeren wird der Erweichungsbereich durch die Schmelztemperatur bestimmt.

Die erfindungsgemäßen insektiziden Zusammensetzungen können außer den oben genannten Hauptkomponenten A (Insektizide) und B (thermoplastische Polymere) als weitere Zusätze organische oder anorganische Hilfsstoffe, wie z.B. Stabilisatoren, Farbstoffe oder Duftstoffe, enthalten.

Die vorstehend beschriebenen erfindungsgemäßen insektiziden Zusammensetzungen werden nach einem einen weiteren Gegenstand der Erfindung bildenden Verfahren hergestellt, bei dem man

das thermoplastische Polymer als Granulat oder Pulver bei der geeigneten Temperatur in einen geeigneten Extruder einbringt und plastifiziert, und unter den für das gewählte Polymer typischen Plastifizierungs-Bedingungen und -Temperaturen das Insektizid über eine geeignete Dosier-Vorrichtung direkt in die Polymerschmelze einbringt und gleichmäßig verteilt,

die erhaltenen Thermoplasten granuliert und

diese Insektizid-haltigen Granulate schließlich thermoplastisch zu Formteilen verarbeitet.

Die Plastifizierung der Polymermassen erfolgt durch Kneten in variablen Scherwalzen-Extrudern, in Knetern (nach Banbury oder Werner oder Pfleiderer), in Ein- und Zweiwellenextrudern oder Spezialknetern. Der Scherwalzenextruder dient hauptsächlich für Batch-Produktionen, während mit Ein- bzw. Zweiwellenextrudern oder Buss-KO-Knetern die Einarbeitung der Additive kontinuierlich durchgeführt wird. Geeignete Extruder oder Kneter für die Einarbeitung der Additive basieren auf dem Prinzip der Friktion; die Reibungswärme erzielt man durch eine horizontale Vorwärts- und Rückwärtsbewegung der Wellen. Die Wellen unterscheiden sich in Bezug auf Gangtiefe, Gangbreite und Steigungswinkel in Rotationsrichtung voneinander, je nach Polymer/Additiv-Mischung. Die Qualität der Homogenisation kann durch die Knetzeit und das Verhältnis Länge zu Durchmesser der Extruderwellen eingestellt werden. Eine gute Homogenisierung und Plastifizierung ist Voraussetzung für die weitere Verarbeitung der Insektizid-haltigen Polymermassen.

Um homogene plastifizierbare Produkte für die thermoplastische Verarbeitung zu Formmassen zu erhalten, muß die Dosierung in besonderer Form erfolgen. Die Zugabe des thermoplastischen Kunststoffes erfolgt in Granulat- oder Pulverform. Der Insektizid-Wirkstoff wird fest oder flüssig entsprechend der erforderlichen Genauigkeit mit Hilfe von volumetrischen oder gravimetrischen Dosiergeräten zugesetzt. Volumetrische Dosiergeräte sind Schnecken-, Zellrad-, Drehteller- oder Schwingrinnendosierer. Gravimetrische Dosiereinrichtungen sind Dosierbandwaagen oder Differentialdosierwaagen. Für gut rieselnde Polymergranulate (Korngröße >50 $\mu$m) werden als Dosiereinrichtungen Vibrationsrinnen, Spiral- oder Blattschnecken und Bänder eingesetzt. Die Wirkstoffe mit Pulvergrößen zwischen 10 und 50 gm werden wie Flüssigkeiten behandelt und vorzugsweise mit "Kammersystemen" wie Zellradschleusen oder Doppelschnecken dosiert. Die Insektizid-Wirkstoffe können in der Füllzone des Extruders zugeführt oder weiter stromabwärts in einer oder mehreren Stufen zugegeben werden. Die Dosierung erfolgt in den aufgeschmolzenen Thermoplasten, um die Bildung von Sekundäragglomeraten zu vermeiden.

Flüssige Insektizid-Wirkstoffe werden bei Zugabe zum Thermoplasten unterschiedlich behandelt. Flüssige Wirkstoffe werden in der Vormischung zugegeben (Heiz/Kühlmischer). Wachsartige Wirkstoffe werden zuerst bei 60 bis 80°C aufgeschmolzen und in einem temperierten Vorratsgefäß gelagert, bevor sie dem Extruder zugeführt werden. Flüssige Wirkstoffe werden mit Zahnradpumpen, Schraubspindelpumpen oder Einfach- bzw. Mehrfachkolbenpumpen zudosiert. Sie werden dem Extruder an einer Stelle zugeführt, wo die Schmelze unter Druck steht. Der Druck in der Schmelze muß über dem Dampfdruck des Wirkstoffes bei der jeweiligen Temperatur der Schmelze liegen, da ansonsten Dampf und Schaum entstehen. An der Einspritzstelle sollte der Druck in Richtung Schneckenspitze abnehmen, d.h. der Druckgradient sollte negativ sein, damit der zugeführte Wirkstoff nicht stromaufwärts "abgepreßt" wird. Bei größeren Wirkstoffmengen und großen Viskositätsunterschieden zwischen Thermoplastschmelze und flüssigem Wirkstoff ist es vorteilhaft, die Flüssigkeit gleichzeitig an mehreren Stellen einzuspritzen. Bei thermisch empfindlichen Wirkstoffen kann dadurch die Verteilung des Wirkstoffes in der Schmelze rascher erreicht werden. Wichtig ist, daß die flüssigen Wirkstoffe möglichst direkt in die Schmelze eingebettet und nicht nur am Rand der Zylinderinnenwand eingespritzt werden. Eine Filmbildung durch niedrigviskose Flüssigkeiten an der Zylinderwand muß durch Verringerung der Dosierung vermieden werden, da sich sonst die Förderung verschlechtert bzw. bei Einschnecken-Extrudem sogar zusammenbrechen kann. Dies ist besonders bei hohen Wirkstoffanteilen zu berücksichtigen. In diesem Fall sind Einspritzventile zu verwenden, die in den Schneckenkanal hineinragen. An der Einspritzstelle ist der Schneckensteg dann unterbrochen. Es muß unbedingt vermieden werden, daß beim Abstellen der Dosierpumpe Thermoplastschmelze in das Einspritzventil und in die Zuführungsleitung eindringt, dort fest wird und die Flüssigkeitszufuhr beim Wiedereinschalten der Dosierpumpe blockiert. Um dies zu vermeiden, setzt man federbelastete Spezialrückschlagventile ein, bei denen die Rückstromsperre direkt an der Auslaßöffnung liegt.

Für die flüssigen Insektizid-Wirkstoffe gilt hinsichtlich der Güte des Einmischprozesses prinzipiell dasselbe wie für die festen Insektizid-Wirkstoffe. Da die zudosierten Flüssigkeiten in den meisten Fällen deutlich niedrigviskoser als die Thermoplastschmelze sind, entfällt jedoch beim Homogenisieren das Problem ihrer Zerteilung. Sie mussen im wesentlichen nur zerteilt werden. Dazu eigen sich Mischringe, da diese ein vielfach abwechselndes Aufteilen und Ausstreichen der einzelnen Schichten bewirken.

Gleiche Mischgüte kann auch durch statische Mischelemente erreicht werden, die zwischen Förderschnecke und Ausformwerkzeug installiert werden.

Die Dosierung flüssiger oder fester Insektizid-Wirkstoffe kann auch in Form von Additivkonzentraten erfolgen. Bei den Konzentraten handelt es sich um Zwischenprodukte, die Wirkstoffe in einer hohen Konzentration in Trägersubstanzen eingebettet enthalten. Trägersubstanz kann dabei das gewünschte Polymer oder ein mit dem Polymer nicht mischbares Material sein (Polymer, Füllstoff). Bei der Endverwendung wird durch Zumischen von weiterem Polymergranulat bis auf die gewünschte niedrige Konzentration zurückverdünnt. Die in solcher Form hochkonzentrierten Wirkstoffe haben die Aufgabe, gut dosierbare Wirkstoff-konzentrate für unterschiedlich einstellbare Konzentrationen zu sein. Meistens liegen diese "Masterbatches" in Granulatform vor.

Die den Insektizid-Wirkstoff enthaltenden Thermoplaste können auf verschiedene Arten granuliert werden. Entweder schneidet man extrudierte und ganz oder teilweise abgekühlte Stränge (Stranggranulation) oder aber man schneidet die heiße Schmelze direkt beim Austritt aus der Düse vor dem Kopf (z.B. Wasserringgranulation).

Die hergestellten Insektizid-haltigen Granulate werden thermoplastisch zu Formteilen weiterverarbeitet oder mit weiteren thermoplastischen Polymeren zu Mischungen verarbeitet (Masterbatch).

Zur Formgebung werden die üblichen bei Kunststoffen anzuwendenden Verfahren benutzt, wie z.B. Spritzgußverarbeitung, Extrusionsblasen, Folienextrusion oder Tiefziehen.

Als pyrethroide Insektizide (Wirkstoffe) werden erfindungsgemäß verwendet:

  1) 3-Allyl-2-methyl-cyclopent-2-en-4-on-1-yl-d-cis/trans-chrysanthemat (Pynamin forte®),
  2) 2,3,5,6-Tetrafluorbenzyl-(+)-1 R-trans-2,2-dimethyl-3-(2,2-dichlorvinyl)-cyclopropancarboxylat (Transfluthrin, Bayothrin®)

oder Mischungen dieser Wirkstoffe.

Als polymere Materialien werden teilkristalline thermoplastische Polymere sowie Mischungen derselben verwendet, die sich thermoplastisch, d.h. als zähflüssige Schmelze, verarbeiten lassen und deren Erweichungsbereich unterhalb des Siedepunktes der einzuarbeitenden Wirkstoffe (Insektizide) unter Normaldruck liegt. Die thermoplastischen Polymere werden für den entsprechenden Wirkstoff so gewählt, daß sich der Wirkstoff zumindest teilweise mit den Polymeren mischt.

Als thermoplastische Polymere werden erfindungsgemäß verwendet:
Polyethylen, Polypropylen und Mischungen davon.

Die erfindungsgemäßen insektiziden Zusammensetzungen können mit Hilfe von Antioxidantien stabilisiert werden, indem man einen UV-Absorber als Additiv der Formulierung beimischt. Als UV-Absorber können alle bekannten UV-Absorber eingesetzt werden.

Bevorzugt eingesetzt werden Phenolderivate, wie z.B. Butylhydroxytoluol (BHT), Butylhydroxyanisol (BHA), Bisphenolderivate, Arylamine, wie z.B. Phenyl-α-naphthylamin, Phenyl-β-naphthylamin, ein Kondensat aus Phenetidin und Aceton oder Benzophenone.

Es können Farbstoffe, wie anorganische Pigmente, z.B. Eisenoxid, Titanoxid, Ferrocyanblau, und organische Farbstoffe, z.B. Alizarin-, Azo- und MetallphthalocyaninFarbstoffe und Metallsalze, z.B. Salze von Eisen, Mangan, Bor, Kupfer, Kobalt, Molybdän und Zink, verwendet werden.

Weiterhin können natürliche Duftstoffe den erfindungsgemäßen insektiziden Formulierungen zugesetzt werden, wie z.B. Moschus, Zibet, Ambra, Castereum und ähnliche Duftstoffe: Ajowaol, Mandelöl, Ambrettesamen absol., Angelikawurzelöl, Anisol, Basilikumöl, Lorbeeröl, Benzoinresinoid, Bergamottessenz, Birkenöl, Rosenholzöl, Pfriemenkraut absol., Cajeputöl, Canangaöl, Gapiscumöl, Kümmelöl, Cardamonöl, Möhrensamenöl, Cassiaöl, Zedernholzöl, Selleriesamenol, Zimtrindenöl, Zitronellöl, Muskattellersalbeiöl, Nelkenöl, Kognaköl, Korianderöl, Cubebenöl, Kampferöl, Dillöl, Estragonöl. Eukalyptusöl, Fenchelöl süß, Calbanumresinoid, Knoblauchöl. Geraniumöl, Ingweröl, Grapefruitöl, Hopfenöl, Hyacinthe absol., Jasmin absol., Wacholderbeerenöl, Labdanumresinoid, Lavandelöl, Lorbeerblätteröl, Zitronenöl, Lemonengrasöl, Liebstöckelöl, Macisöl, Mandarinenöl, Misoma absol., Myrrhe absol., Senföl, Narcisse absol., Neroliöl, Muskatnußöl, Eichenmoos absol., Olibanumresinoid, Zwiebelöl, Opoponaxresinoid, Orangenöl, Orangenblütenöl, Iris konkret, Pfefferöl, Pfefferminzöl, Perubalsam, Petitgrainöl, Fichtennadelöl, Rose absol., Rosenöl, Rosmarinöl, Sandelholzöl, Salbeiöl, Krauseminzöl, Styraxöl, Thymianöl, Tolubalsam, Tonkabohnen absol., Tuberose absol., Terpentinöl, Vanilleschoten absol., Vetiveröl, Veilchenblätter absol., YlangYlang-Öl und ähnliche Pflanzenöle.

Als synthetische Duftstoffe können den erfindungsgemäßen insektiziden Formulierungen zugesetzt werden: Pinen, Limonen und ähnliche Kohlenwasserstoffe; 3,3,5-Trimethylcyclohexanol, Linalool, Geraniol, Nerol, Citroneliol, Menthol, Borneol, Borneylmethoxycyclohexanol, Benzylalkohol, Anisalkohol, Zimtalkohol, β-Phenylethylalkohol, cis-3-Hexanol, Terpineol und ähnliche Alkohole; Anethole, Moschusxylol, Isoeugenol, Methyleugenol und ähnliche Phenole; α-Amylzimtaldehyd, Anisaldehyd, n-Butyraldehyd, Cuminaldehyd, Cyclamenaldehyd, Decylaldehyd, Isobutyraldehyd, Hexylaldehyd, Heptylaldehyd, n-Nonylaldehydnonadienol, Citral, Citronellal, Hydroxycitronellal, Benzaldehyd, Methylnonylacetaldehyd, Zimtaldehyd, Dodecanol, α-Hexylzimtaldehyd, Undekanal, Heliotropin, Vanillin, Ethylvanillin und ähnliche Aldehyde, Methylamylketon, Methyl-β-naphthylketon, Methylnonylketon, Moschusketon, Diacetyl, Acetylpropionyl, Acetylbutyryl, Carvon, Methon, Campher, Acetophenon, p-Methylacetophenon, Jonon, Methylionon und ähnliche Ketone; Amylbutyrolacton, Diphenyloxid, Methylphenylglycidat, Nonylaceton, Cumarin, Cineol, Ethylmethylphenylglycidat und ähnliche Lactone bzw. Oxide, Methylformiat, Isopropylformiat, Linalylformiat, Ethylacetat, Octylacetat, Methylacetat, Benzylacetat, Cinnamylacetat, Butylpropionat, Isoamylacetat, Isopropylisobutyrat, Geranylisovalerat, Allylcapronat, Butylheptylat, Octylcaprylat, Methylheptincarboxylat, Methyloctincarboxylat, Isoamylcaprylat, Methyllaurat, Ethylmyristat, Methylmyristat, Ethylbenzoat, Benzylbenzoat, Methylcarbinylphenylacetat, Isobutylphenylacetat, Methylcinnamat, Styracin, Methylsalicylat, Ethylanisat, Methylanthranilat, Ethylpyruvat, Ethyl-α-butylbutyrat, Benzylpropionat, Butylacetat, Butylbutyrat, p-tert.-Butylcyclohexylacetat, Cedrylacetat, Citronellylacetat, Citronellylformiat, p-Cresylacetat, Ethylbutyrat, Ethylcaproat, Ethylcinnamat, Ethylphenylacetat, Ethylenbrassylat, Geranylacetat, Geranylformiat, Isoamylsalicylat, Isoamylvalerat, Isobornylacetat, Linalylacetat, Methylanthranilat, Methyldihydrojasmonat, Nonylacetat, β-Phenylethylacetat, Trichlormethylenphenylcarbinylacetat, Terpinylacetat, Vetiverylacetat und ähnliche Ester. Diese Duftstoffe können einzeln verwendet werden, oder mindestens zwei davon können im Gemisch miteinander verwendet werden.

Neben einem Duftstoff kann die erfindungsgemäße insektizide Formulierung gegebenenfalls zusätzlich die in der Duftstoffindustrie üblichen Zusatzstoffe, wie Patchouliöl oder ähnliche flüchtigkeitshemmende Mittel wie Eugenol oder ähnliche viskositätsregulierende Mittel enthalten.

Die erfindungsgemäßen insektiziden Zusammensetzungen enthalten im allgemeinen zwischen 0,1 und 80 Gew.-%, vorzugsweise zwischen 0,2 und 40 Gew.-%, besonders bevorzugt zwischen 1,0 und 20 Gew.-% Wirkstoff (Insektizid).

Gegenstand der Erfindung ist außerdem die Verwendung der vorstehend beschriebenen erfindungsgemäßen insektiziden Zusammensetzungen, bei der man diese bei erhöhter Temperatur auf Insekten, die in Innenräumen vorkommen, einwirken lässt. Vorzugsweise werden die erfindungsgemäßen insektiziden Zusammensetzungen in der Weise verwendet, dass man die Insektizide durch ein geeignetes Verdampfungsgerät verflüchtigt.

Die Herstellung und Verwendung der erfindungsgemäßen insektiziden Zusammensetzungen wird in den nachfolgenden Beispielen näher erläutert.

### Beispiel 1

Compoundierung von Insektizid-Wirkstoffen in verschiedene Polymere

Compoundiert wird auf einem Zweiwellen-Meßextruder BRABENDER PLASTICORDERPL 2000 (Extrudertyp: 35/17 D, Extruderkühlung: Luft, Einzugskühlung: Wasser, 3 mm-Rundstrangdüse, vier elektrisch beheizte Heizzonen).

Das Polymergranulat dosiert man bei der jeweiligen Temperatur über eine Engelhardt-Waage in den Extruder. Der Insektizid-Wirkstoff wird in einem mit Wasserdampf beheizten Vorratsbehälter erwärmt und über eine Zahnradpumpe (Ismatec) zugepumpt. Der Durchsatz wird auf insgesamt 6 kg / h eingestellt.

Der austretende Polymerstrang wird im Wasserbad abgekühlt und dann im Granulator zerkleinert. Das Granulat trocknet man bei ca. 50°C im Wasserstrahlvakuum.

| Beispiel | Polymer | Wirkstoff | Heizzonen-Temp. (°C) | | | | | Dreh-moment | Druck | Drehzahl |
|---|---|---|---|---|---|---|---|---|---|---|
| | | | 1 | 2 | 3 | | Düse | [Nm] | [bar] | [1/mn] |
| 1.1. | Polyethylen | Transfluthrin [2 %] | 200 | 220 | 220 | 220 | 230-235 | | 33-35 | 60 |
| 1.2. | Poly-propylen | Transfluthrin [2 %] | 220 | 240 | 240 | 240 | 251-256 | 49-50 | 37-49 | 60 |
| 1.3. | Polyethylen | Pynamin forte [2 %] | 200 | 220 | 220 | 220 | 230-235 | 35-37 | 33-35 | 60 |
| 1.4. | Poly-propylen | Transfluthrin [5 %] | 220 | 240 | 240 | 240 | 251-256 | 49-50 | 37-49 | 60 |

EP 0 880 314 B1

Beispiel 2

Abgabeverhalten von insektiziden Zusammensetzungen auf Basis von Polymeren

**Heizer:**

Arbeitstemperatur 100°C: DBK-Plattenheizer mit PTC HPO1-4/09,
Arbeitstemperatur 110°C: DBK-Plattenheizer mit PTC HPO1-2/11.

**2.1. Vergleich verschiedener polymerer Materialien**

Gravimetrische Tests:

Die ausgewogenen Testkörper werden auf die vorgesehenen kalten Heizer mittig aufgelegt und nach den jeweiligen 2 Zyklen genau ausgewogen. Die Tests werden so lange durchgeführt, bis die Prüfkörper keinen Gewichtsverlust mehr zeigen. Theoretische Abdampfmenge

(Testkörper) Start x WI (verdampfbare Inhalte oder Wirkstoff) = theo m (Abdampfmenge).

Temperatur: 110 °C.
DBK-Heizgerät mit PTC.
Prüfkörper: 69 mm x 40 mm x 1 mm. Zyklen: 2 x 8 h / Tag.

| | Beispiel Nr. | Material | Wirkstoff | Herst.- Beispiel | Gewichtsverlust in mg/h | | |
|---|---|---|---|---|---|---|---|
| | | | | | Anfang 8h | Mitte 40 h | Ende 80 h |
| | 2.1.1. | Polypropylen 2 | % Transfluthrin | 1.2. | 1,26 | 1,3 | 0,1 |

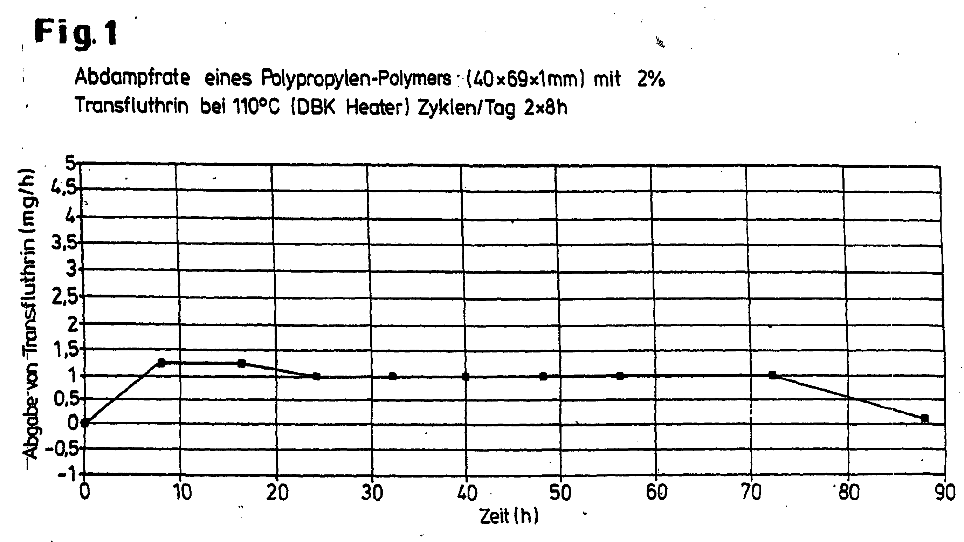

vgl. Fig. 1

**2.2. Temperatur-Einfluß**

Gravimetrische Tests:

Die ausgewogenen Testkörper werden auf die vorgesehenen **kalten** Heizer mittig aufgelegt und nach den jeweiligen 2 Zyklen genau ausgewogen. Die Tests werden so lange durchgeführt, bis die Prüfkörper keinen Gewichtsverlust mehr zeigen. Theoretische Abdampfmenge

(Testkörper) Start x WI (verdampfbare Inhalte oder Wirkstoff) = theo m (Abdampfmenge).

menge).
DBK-Heizgerät mit PTC.
Prüfkörper: 69 mm x 40 mm x 1 mm.
Zyklen: 1 x 8 h / Tag.

| Beispiel Nr. | Temp. (°C) | Material | Wirkstoff | Herst.- Beispiel | Gewichtsverlust in mg/h | | |
|---|---|---|---|---|---|---|---|
| | | | | | Anfang 8h | Mitte 40h | Ende 64h |
| 2.2.1. | 110 | Polypropylen | 2 % Transfluthrin | 1.2. | 2,5 | 0,5 | 0,1 |
| 2.2.2. | 100 | Polypropylen | 2 % Transfluthrin | 1.2. | 1,4 | 0,6 | 0,3 |

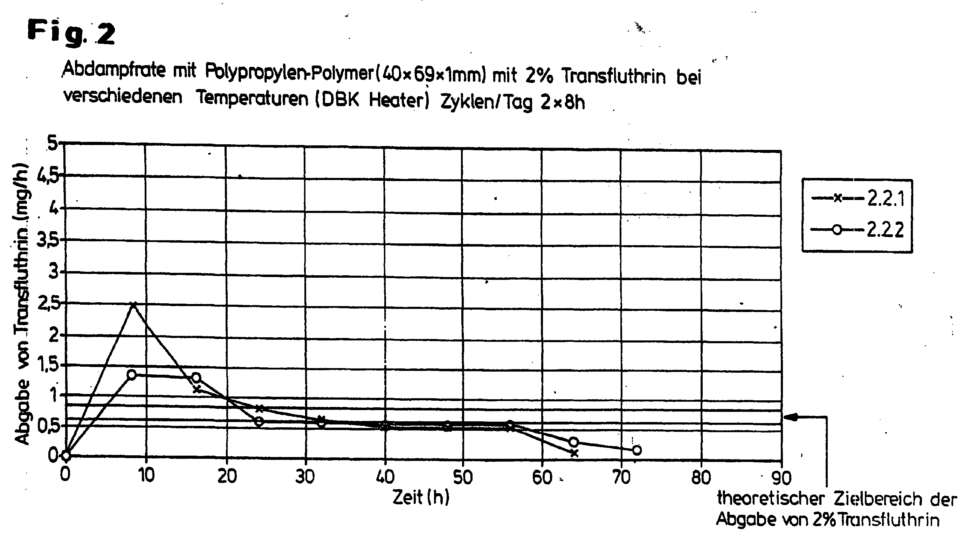

vgl. Fig. 2

**2.3. Gravimetrischer Soll/Ist-Vergleich**

Gravimetrische Tests:

Die ausgewogenen Testkörper werden auf die vorgesehenen **kalten** Heizer mittig aufgelegt und nach den jeweiligen 2 Zyklen genau ausgewogen. Die Tests werden so lange durchgeführt, bis die Prüfkörper keinen Gewichtsverlust mehr zeigen. Theoretische Abdampfmenge

$$\text{(Testkörper) Start x WI (verdampfbare Inhalte oder Wirkstoff)} = \text{theo m (Abdampf-menge)}.$$

Vergleich zwischen Wirkstoffmenge, die pro Testkörper theoretisch enthalten sein kann, und tatsächlichem Gesamtgewichtsverlust.
Temperatur: 110°C.
DBK-Heizgerät mit PTC.
Prüfkörper: 69 mm x 40 mm x 1 mm. Zyklen: 2 x 8 h / Tag.

| Beispiel Nr. | Material | Wirkstoff | Herst.- Beispiel | Theor. Wirkstoff menge [mg] | Gesamt verlust [mg] | Gesamt verlust in [%] |
|---|---|---|---|---|---|---|
| 2.3.1. | Polypropylen | 2 % Transfluthrin | 1.2. | 49,0 | 47,3 | 96,5 |

**2.4. Konzentrations-Einfluß**

Gravimetrische Tests:

Die ausgewogenen Testkörper werden auf die vorgesehenen **kalten** Heizer mittig aufgelegt und nach den jeweiligen 2 Zyklen genau ausgewogen. Die Tests werden so lange durchgeführt, bis die Prüfkörper keinen Gewichtsverlust mehr zeigen. Theoretische Abdampfmenge

$$\text{(Testkörper) Start x WI (verdampfbare Inhalte oder Wirkstoff)} = \text{theo m (Abdampf-menge)}.$$

DBK-Heizgerät mit PTC.
Prüfkörper: 69 mm x 40 mm x 1 mm.
Zyklen: 1 x 8 h / Tag.

| Beispiel Nr. | Temp. [°C] | Material | Wirkstoff | Herst. Beispiel | Gewichtsverlust in mg/h | | | |
|---|---|---|---|---|---|---|---|---|
| | | | | | Anfang 16h | 40h | 64h | 128h |
| 2.4.1. | 100 | Polypropylen | 2 % Transfluthrin | 1.2. | 1.2 | 0.6 | 0,3 | - |
| 2.4.2. | 100 | Polypropylen | 5% Transfluthrin | 1.11. | 1,5 | 0,8 | 0,4 | 0,4 |

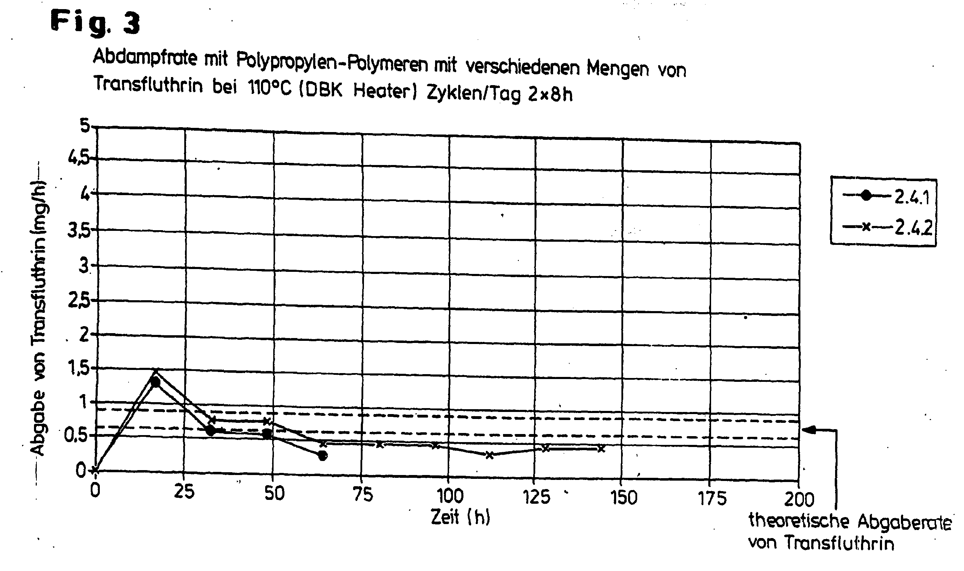

vgl. Fig. 3

<u>Beispiel 3</u>

<u>Biologische Ergebnisse</u>

<u>Prüfung von Verdampfersystemen auf Mückenwirkung in 20 m³-Räumen</u>

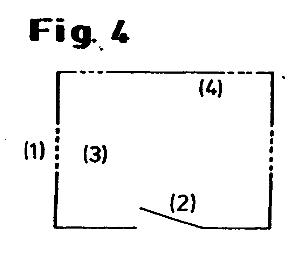

Die Prüfungen werden in 20 m³ (L = 2,84 m, B = 2,33 m, H = 3,03 m) großen Räumen, deren Innenwände und Decken aus Edelstahl (DIN 4571) mit jeweils 5 Fenstern (1) pro Raum bestehen, durchgeführt. [vgl. Fig. 4].
Der Fußboden ist mit unlasierten Kacheln gefliest. In die Versuchsräume werden von der Decke herab, in einer Höhe von 1,70 m, 0,45 m von der jeweiligen Wand entfernt, 3 Drahtkäfige (L = 8,5 cm, 0 = 8,0 cm, Maschenweite = 1,0 mm) mit je 20 Versuchstieren gehängt (Position (2), (3) und (4)). Darunter wird jeweils an einem Stativ in einer Höhe von 0,8 m bei Position (3) und (4) je ein weiterer Käfig positioniert.
In der Mitte des Raumes auf dem Fußboden wird das elektrisch betriebene Verdampfersystem aufgestellt, der Raum geschlossen und das Öfchen in Betrieb genommen. Die Betriebszeit beträgt 8 Stunden, während dieser Zeit wird von außen durch die Fenster ermittelt, wann in den einzelnen Käfigen 10%, 50%, 95% und 100% der Mücken "knock down" gingen. Die Testtiere bleiben 8 Stunden in den Räumen. Dann wird der %-Satz der in Rückenlage (KD) gefallenen Tiere bestimmt. Alle Tiere werden den Käfigen entnommen und in insektizidfreie glasklare Kunststoffbecher überführt. Die Becher werden mit gelochten Deckeln verschlossen und mit mit einer 10 %igen Zuckerlösung getränkten Zellstofftupfern versehen. Nachdem die Versuchstiere 24 Stunden lang in insektizidfreier Atmosphäre gehalten wurden, wird die Mortalität bestimmt.
Nach Versuchsende wird das beheizte Verdampfergefäß aus dem Raum entfernt und dieser mit einem 200 fachen Luftwechsel/Stunde gelüftet. Das Verdampfergefäß wird bei Raumtemperatur gelagert.

EP 0 880 314 B1

**Beispiel 3.1.**

Prüfung von Beispiel 1.2 in 20 m³ Räumen gegen Stechmücken der Art Aedes aegypti, sensibel.

DBK-Heizgerät mit PTC
Heizer-Temperatur: 110°C
Prüfkörper: 69 mm x 40 mm x 1 mm
2 % Transfluthrin in Polypropylen

Raum-Temperatur: 24°C
rel. Feuchte: 50 bis 76 %

| Betriebsdauer bei Ansatz/ Prüfung nach Tagen (Stunden) | Testhöhe cm | Heizer 1 | | | | | | Heizer 2 | | | | | |
|---|---|---|---|---|---|---|---|---|---|---|---|---|---|
| | | % knock down nach Stunden (h) und Minuten (') | | | | % Mortalität | | % knock down nach Stunden (h) und Minuten (') | | | | % Mortalität | |
| | | KT 10 | KT 50 | KT 95 | KT 100 | 8 h | 24 h | KT 10 | KT 50 | KT 95 | KT 100 | 8 h | 24 h |
| 0 Tage | 170 | 14' | 17' | 22' | 24' | 100 | 100 | 15' | 17' | 21' | 23' | 100 | 100 |
| | 80 | 15' | 18' | 21' | 22' | 100 | 100 | 16' | 18' | 21' | 22' | 100 | 100 |
| 1 Tag (8 h) | 170 | 19' | 21' | 25' | 27' | 100 | 100 | 22' | 26' | 28' | 32' | 100 | 100 |
| | 80 | 25' | 37' | 41' | 46' | 100 | 100 | 26' | 33' | 39' | 41' | 100 | 100 |
| 2 Tage (16 h) | 170 | 22' | 26' | 31' | 34' | 100 | 100 | 22' | 26' | 31' | 35' | 100 | 100 |
| | 80 | 29' | 35' | 40' | 43' | 100 | 100 | 31' | 38' | 45' | 47' | 100 | 100 |
| 3 Tage (24 h) | 170 | 24' | 28' | 32' | 34' | 100 | 100 | 25' | 28' | 32' | 35' | 100 | 100 |
| | 80 | 31' | 37' | 40' | 42' | 100 | 100 | 34' | 39' | 42' | 45' | 100 | 100 |
| 4 Tage (32 H) | 170 | 24' | 27' | 34' | 36' | 100 | 100 | 35' | 39' | 45' | 48' | 100 | 100 |
| | 80 | 33' | 38' | 42' | 46' | 100 | 100 | 39' | 44' | 49' | 52' | 100 | 100 |
| 5 Tage (40 h) | 170 | 32' | 38' | 46' | 49' | 100 | 100 | 37' | 43' | 49' | 53' | 100 | 100 |
| | 80 | 40' | 45' | 52' | 56' | 100 | 100 | 43' | 50' | 55' | 58' | 100 | 100 |
| 6 Tage (48 h) | 170 | 40' | 47' | 55' | 59' | 100 | 100 | 53' | 1h00' | 1h12' | 1h19' | 100 | 100 |
| | 80 | 51' | 57' | 1h01' | 1h06' | 100 | 100 | 49' | 56' | 1h01' | 1h09' | 100 | 100 |
| 7 Tage (56 h) | 170 | 58' | 1h08' | 1h19' | 1h24' | 100 | 100 | 1h07' | 1h23' | 1h40' | 1h50' | 100 | 100 |
| | 80 | 1h09' | 1h22' | 1h35' | 1h40' | 100 | 100 | 1h08' | 1h27' | 1h46' | 1h59' | 100 | 100 |

## Beispiel 3.2

Prüfung von Beispiel 1.2 in 20 m³ Räumen gegen Stechmücken der Art Culex quinquefasciatus, resistent.

DBK-Heizgerät mit PTC
Heizer-Temperatur: 110°C
Prüfkörper: 69 mm x 40 mm x 1 mm
2 % Transfluthrin in Polypropylen

Raum-Temperatur: 24°C
rel. Feuchte: 50 bis 76 %

| Betriebsdauer bei Ansatz/Prüfung nach Tagen (Stunden) | Testhöhe cm | Heizer 1 | | | | | | Heizer 2 | | | | | |
|---|---|---|---|---|---|---|---|---|---|---|---|---|---|
| | | % knock down nach Stunden (h) und Minuten (') | | | | % Mortalität nach | | % knock down nach Stunden (h) und Minuten (') | | | | % Mortalität nach | |
| | | KT 10 | KT 50 | KT 95 | KT 100 | 8h | 24h | KT 10 | KT 50 | KT 95 | KT 100 | 8h | 24h |
| 0 Tage | 170 | 35' | 41' | 49' | 57' | 100 | 100 | 39' | 44' | 56' | 1h05' | 100 | 100 |
| | 80 | 41' | 48' | 58' | 1h08' | 100 | 100 | 41' | 55' | 1h06' | 1h12' | 100 | 100 |
| 1 Tag (8h) | 170 | 49' | 1h05' | 1h16' | 1h38' | 100 | 100 | 1h08' | 1h32' | 1h56' | 2h15' | 100 | 100 |
| | 80 | 1h05' | 1h39' | 2h04' | 2h17' | 100 | 100 | 1h26' | 2h05' | 2h39' | 3h00' | 100 | 100 |
| 2 Tage (16h) | 170 | 1h26' | 1h45' | 2h03' | 2h19' | 100 | 100 | 1h50' | 2h16' | 2h35' | 2h54' | 100 | 100 |
| | 80 | 1h33' | 1h53' | 2h27' | 2h40' | 100 | 100 | 1h41' | 2h15' | 2h40' | 3h08' | 100 | 100 |
| 3 Tage (24h) | 170 | 1h31' | 1h49' | 2h15' | 2h32' | 100 | 100 | 1h53' | 2h21' | 2h51' | 3h08' | 100 | 100 |
| | 80 | 2h10' | 2h31' | 2h49' | 3h02' | 100 | 100 | 2h14' | 2h41' | 3h22' | 3h38' | 100 | 100 |
| 4 Tage (32h) | 170 | 1h41' | 2h13' | 2h41' | 3h05' | 100 | 100 | 2h06' | 2h46' | 3h44' | 3h57' | 100 | 100 |
| | 80 | 2h19' | 2h47' | 3h17' | 3h36' | 100 | 100 | 2h47' | 3h54' | 4h35' | 5h12' | 100 | 100 |
| 5 Tage (40h) | 170 | 2h17' | 3h09' | 4h43' | 5h44' | 100 | 100 | 2h57' | 4h21' | 6h30' | 7h24' | 100 | 100 |
| | 80 | 2h36' | 4h02' | 4h58' | 5h37' | 100 | 100 | 3h50' | 5h35' | 7h15' | >8h | 98 | 100 |
| 6 Tage (48h) | 170 | 4h02' | 5h20' | >8h | >8h | 97 | 100 | 5h52' | >8h | >8h | >8h | 65 | 72 |
| | 80 | 4h01' | 6h22' | 7h48' | >8h | 95 | 100 | 6h26' | >8h | >8h | >8h | 53 | 25 |
| 7. Tage (56h) | 170 | 6h50' | >8h | >8h | >8h | 32 | 65 | >8h | <8h | >8h | >8h | 8 | 27 |
| | 80 | 7h15' | >8h | >8h | >8h | 13 | 50 | >8h | >8h | >8h | >8h | 5 | 10 |

EP 0 880 314 B1

**Abdampfraten während der biologischen Prüfung:**

DBK-Heizgerät mit PTC      Raum-Temperatur: 24°C
Heizer-Temperatur: 110°C      rel. Feuchte: 50-76 %
Prüfkörper: 69 mm x 40 mm x 1 mm
2 % Transfluthrin in Polypropylen

| Betriebsdauer (Stunden) | Heizer 1 | | Heizer 2 | |
|---|---|---|---|---|
| | Abdampfrate/ Tag (mg) | Abdampfmenge Gesamt (mg) | Abdampfrate/ Tag (mg) | Abdampfmenge Gesamt (mg) |
| 8 | 20,1 | 20,1 | 21,0 | 21,0 |
| 16 | 7,9 | 28,0 | 9,6 | 30,6 |
| 24 | 9,6 | 37,6 | 8,0 | 38,6 |
| 32 | 5,3 | 42,9 | 5,4 | 44,0 |
| 40 | 2,4 | 45,3 | 3,3 | 47,3 |
| 48 | 1,8 | 47,1 | 1,5 | 48,8 |
| 56 | 1,0 | 48,1 | 1,0 | 49,8 |
| 64 | 0,6 | 48,7 | 0,9 | 50,7 |

**Patentansprüche**

1. Insektizide Zusammensetzungen, enthaltend

   A) mindestens ein Insektizid aus der Gruppe
   3-Allyl-2-methyl-cyclopent-2-en-4-on-1-yl-d-cis/trans-chrysanthemat (Pynamin forte®),
   2,3,5,6-Tetrafluorbenzyl-(+)-1R-trans-2,2-dimethyl-3-(2,2-dichlorvinyl)-cyclopropancarboxylat (Transfluthrin, Bayothrin®, und
   B) mindestens ein thermoplastisches Polymer mit einem Kristallit-Schmelzbereich zwischen 100 und 300 °C aus der Gruppe Polyethylen und Polypropylen, aus dem das Insektizid bei einer Temperatur von 60 bis 150 °C freigesetzt werden kann, ohne dass sich die Form des thermoplastischen Polymers ändert.

2. Zusammensetzungen nach Anspruch 1, die zusätzlich Stabilisatoren, Farbstoffe oder Duftstoffe enthalten.

3. Verfahren zur Herstellung der insektiziden Zusammensetzungen nach Anspruch 1 oder 2, bei dem man das thermoplastische Polymer als Granulat oder Pulver bei der geeigneten Temperatur in einen geeigneten Extruder einbringt und plastifiziert und unter den für das gewählte Polymer typischen Plastifizierungs-Bedingungen und -Temperaturen das Insektizid über eine geeignete Dosier-Vorrichtung direkt in die Polymerschmelze einbringt und gleichmäßig verteilt,
   die erhaltenen Thermoplasten granuliert und
   diese Insektizid-haltigen Granulate schließlich thermoplastisch zu Formteilen verarbeitet.

4. Verwendung der insektiziden Zusammensetzungen nach Anspruch 1 oder 2, bei der man diese bei erhöhter Temperatur auf Insekten, die in Innenräumen vorkommen, einwirken lässt.

5. Verwendung nach Anspruch 4, bei der man die Insektizide durch ein geeignetes Verdampfungsgerät verflüchtigt.

**Claims**

1. Insecticidal compositions, comprising

   A) at least one insecticide selected from the group consisting of
   3-allyl-2-methyl-cyclopent-2-en-4-on-1-yl-d-cis/trans-chrysanthemate (Pynamin forte®),
   2,3,5,6-tetrafluorobenzyl-(+)-1R-trans-2,2-dimethyl-3-(2,2-dichlorovinyl)-cyclopropanecarboxylate (Transfluthrin, Bayothrin®), and
   B) at least one thermoplastic polymer having a cristallite melting range of from 100 to 300 °C selected from the group consisting of polyethylene and polypropylene,
   wherefrom said insecticide may be released at a temperature of from 60 to 150 °C without changing the shape of the thermoplastic polymer.

2. The compositions according to claim 1 additionally comprising stabilizers, colorants or fragrances.

3. A process for preparing the insecticidal compositions according to claim 1 or 2 wherein the thermoplastic polymer in the form of granules or of a powder is introduced at a suitable temperature into a suitable extruder and plastified therein and the active ingredient A is incorporated directly into the polymer melt under plastification conditions and temperatures which are typical for the selected polymer by means of a suitable dosing means and uniformly dispersed therein,
   the obtained thermoplasts are granulated, and
   finally the granulates containing the insecticide are processed thermoplastically to form moldings.

4. Use of the insecticical compositions according to claim 1 or 2 where the insects being present in closed rooms are subjected to the compositions at an elevated temperature.

5. The use according to claim 4 wherein the insecticides are volatilized by means of a suitable evaporation device.


**Revendications**

1. Compositions insecticides, comprenant

   A) au moins un insecticide du groupe
   d-cis/trans-chrysanthèmate de 3-allyl-2-méthyl-cyclopent-2-èn-4-on-1-yle (Pynamin forte®),
   (+)-1R-trans-2,2-diméthyl-3-(2,2-dichlorovinyl)-cyclopropanecarboxylate de 2,3,5,6-tétrafluorobenzyle (transfluthrine, Bayothrin®), et
   B) au moins un polymère thermoplastique ayant une gamme de fusion de la cristallite entre 100 et 300°C dans le groupe du polyéthylène et du polypropylène, dont l'insecticide peut être libéré à une température de 60 à 150°C, sans que la forme du polymère thermoplastique ne se modifie.

2. Compositions selon la revendication 1, qui contiennent en plus des stabilisants, des agents colorants ou parfumants.

3. Procédé de fabrication de compositions insecticides selon la revendication 1 ou 2, dans lequel on introduit et plastifie le polymère thermoplastique sous forme de granulé ou de poudre dans une extrudeuse appropriée, à température appropriée, et on introduit et répartit régulièrement l'insecticide directement dans le polymère fondu par le biais d'un système de dosage approprié, dans les conditions et températures de plastification typiques pour le polymère choisi,
   granule les thermoplastiques obtenus et
   transforme enfin thermoplastiquement en pièces moulées ces granulés contenant l'insecticide.

4. Utilisation des compositions insecticides selon la revendication 1 ou 2, dans laquelle on laisse agir celles-ci à température élevée sur des insectes, qui sont présents dans les espaces intérieurs.

5. Utilisation selon la revendication 4, dans laquelle on volatilise les insecticides par le biais d'un appareil de vaporisation approprié.

# Fig.1

Abdampfrate eines Polypropylen-Polymers (40×69×1mm) mit 2%
Transfluthrin bei 110°C (DBK Heater) Zyklen/Tag 2×8h

EP 0 880 314 B1

# Fig. 2

Abdampfrate mit Polypropylen-Polymer(40×69×1mm) mit 2% Transfluthrin bei verschiedenen Temperaturen (DBK Heater) Zyklen/Tag 2×8h

theoretischer Zielbereich der Abgabe von 2%Transfluthrin

EP 0 880 314 B1

# Fig. 3

Abdampfrate mit Polypropylen-Polymeren mit verschiedenen Mengen von Transfluthrin bei 110°C (DBK Heater) Zyklen/Tag 2×8h

EP 0 880 314 B1

**Fig. 4**